# FASCICULE DE BREVET EUROPEEN

(11) **EP 0 637 683 B1**
(45) Date de publication et mention de la délivrance du brevet: **08.10.1997**
(21) Numéro de dépôt: 94401782.1
(22) Date de dépôt: 03.08.1994
(51) Int. Cl.: F02C 7/18, F02C 7/12

(54) **Système de ventilation des disques et du stator de turbine d'un turboréacteur**
Kühlungssystem für den Turbinenstator und die Turbinenrotorscheiben einer Turbomaschine
Cooling system for the turbine stator and rotor disks of a turbomachine

(30) Priorité: 05.08.1993 FR 9309657
(43) Date de publication de la demande: 08.02.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Guimier, Michel, F-77720 Mormant (FR); Paris, Philippe Marcel, F-77350 Le Mee Sur Seine (FR)

(56) Documents cités:
- EP-A- 0 511 935
- EP-A- 0 564 135
- FR-A- 2 557 207
- FR-A- 2 585 407

## Description

### DOMAINE DE L'INVENTION

L'invention concerne les turbomachines possédant une turbine dont les disques ou les pales et le stator sont à maintenir à une ou plusieurs températures optimales de fonctionnement. C'est en particulier le cas des turboréacteurs de propulsion d'avion. L'invention concerne en particulier la ventilation des disques et du stator de la turbine de ce type de machine.

### ART ANTERIEUR

Les turbomachines à gaz, telles que les turboréacteurs à flux axial, présentent un étage de compression, un étage de combustion et un étage de turbine. Le gaz traverse axialement ces différents étages. Il est d'abord comprimé dans l'étage de compression, puis brûlé avec le combustible dans l'étage de combustion. Il est enfin détendu dans l'étage de turbine pour fournir un travail au rotor et ainsi la poussée produite par le turboréacteur. Le rotor de cet étage est équipé de disques.

Or, au fur et à mesure que les températures de fonctionnement augmentent à l'intérieur du turboréacteur, il s'avère nécessaire de fournir de l'air de refroidissement sous pression aux disques du rotor de la turbine, car ceux-ci se trouvent très près de la zone de sortie de la chambre de combustion et subissent des dilatations importantes. En effet, on suppose que la technologie des disques de la turbine est déterminée pour ajuster la dilatation du rotor à celle du stator durant la phase de croisière pour que les performances du turboréacteur soient maintenues à leur plus haut niveau. Il s'ensuit que lors des phases de décollage et/ou de montée, le turboréacteur fonctionnant à plein régime, les températures des composants des turbines se situent au-dessus des limites imposées par leur tenue mécanique. Il est donc indispensable d'éviter de telles situations et, par conséquent, d'assurer le refroidissement des disques de la turbine par de l'air suffisamment frais.

A ce sujet, on connaît par le document de brevet FR-A-2 557 207, un système de refroidissement pour fournir un tampon d'air à un compartiment de paliers dans un turboréacteur. Dans ce système, une source d'air froid est prélevée au niveau de la soufflante du turboréacteur. Une source de gaz sous pression est prélevée au niveau de l'étage arrière du compresseur haute pression, cet air étant à haute température. Un échangeur de chaleur est utilisé pour refroidir cet air haute pression, au moyen de l'air froid prélevé au niveau de la soufflante.

Le but de l'invention est d'améliorer l'efficacité de tels dispositifs en permettant au système d'intervenir sur les disques et le stator de la turbine, quel que soit le régime du turboréacteur, dans le but de maintenir les disques et le stator dans une fourchette de température relativement restreinte, afin d'éviter des dilatations trop importantes et des surtempératures.

D'autre part, on connaît des dispositifs analogues répartissant l'air de refroidissement sur les disques de la turbine au moyen de quatre tuyaux différents, de manière à intervenir sur plusieurs étages de la turbine.

EP-A-564.135 appartenant à l'état de la technique visé par l'article 54(3) CBE décrit un système de refroidissement de turboréacteur comportant au moins un premier prélèvement d'air à haute pression et un prélèvement d'air à basse pression entrant dans un échangeur de chaleur dont une sortie est dirigée vers le flux secondaire et deux autres sorties alimentent l'une la ventilation de la turbine à haute pression et l'autre celle de la turbine à basse pression.

### RESUME DE L'INVENTION

A cet effet, l'objet principal de l'invention est un sytème de ventilation des disques et du stator d'une turbine d'un turboréacteur, comprenant selon l'invention :
- un premier prélèvement d'air à haute pression et à une température relativement élevée, destiné à refroidir les disques ;
- un prélèvement d'air froid à basse température et à basse pression, destiné à refroidir le stator ;
- un échangeur de chaleur appliqué à ces deux prélèvements pour refroidir l'air chaud à haute pression, l'air froid à basse pression se trouvant ainsi réchauffé, de manière à permettre le refroidissement optimal des disques et du stator pendant les phases de fonctionnement à plein régime du turboréacteur et lorsque ces deux prélèvements sont divisés en plusieurs tubes de refroidissement, on prévoit une dérivation sur le prélèvement basse pression pour court-circuiter l'échangeur de chaleur, et une vanne placée en amont de la dérivation de basse pression est commandée de manière à réguler l'alimentation de cette dérivation en fonction du régime de la turbomachine.

Dans la réalisation principale du système selon l'invention, les tubes de refroidissement issus du prélèvement de haute pression débouchent à proximité des disques du rotor pour les refroidir.

De même, les tubes de refroidissement issus du prélèvement de basse pression débouchent à proximité du stator pour le refroidir.

On prévoit de préférence un deuxième prélèvement d'air chaud à une haute pression et passant dans l'échangeur de chaleur pour permettre ainsi l'augmentation de débit d'air chaud haute pression passant dans l'échangeur, afin de réchauffer les disques de la turbine durant les phases de fonctionnement de ce turboréacteur en régime de croisière, l'air froid étant alors en conséquence réchauffé.

Le rendement du système est amélioré lorsque, pour chaque tube de refroidissement, le système comprend :
- un capteur de pression placé en amont de l'échangeur de chaleur sur chaque tube de refroidissement ;
- une vanne pilotée, placée sur chaque tube de refroidissement en amont du capteur de pression ;
- un calculateur étant connecté à la sortie de chaque capteur de pression et à l'entrée de chaque vanne pilotée, pour réguler les vannes pilotées en fonction des paramètres thermodynamiques et des conditions de fonctionnement de la turbomachine et, d'autre part, en fonction d'une éventuelle chute de pression dans un des tubes de refroidissement.

### LISTE DES FIGURES

L'invention et ses caractéristiques techniques seront mieux comprises à la lecture de la description suivante, accompagnée des figures qui sont respectivement :
- figure 1, un schéma de l'installation du système selon l'invention sur un turboréacteur pour l'aviation civile ;
- figure 2, un schéma de l'installation du système selon l'invention améliorée par une caractéristique technique ;
- figure 3, des courbes comparatives de la température du rotor dans un turboréacteur sur lequel est installé le système selon l'invention.

### DESCRIPTION DETAILLEE D'UN MODE DE REALISATION DE L'INVENTION

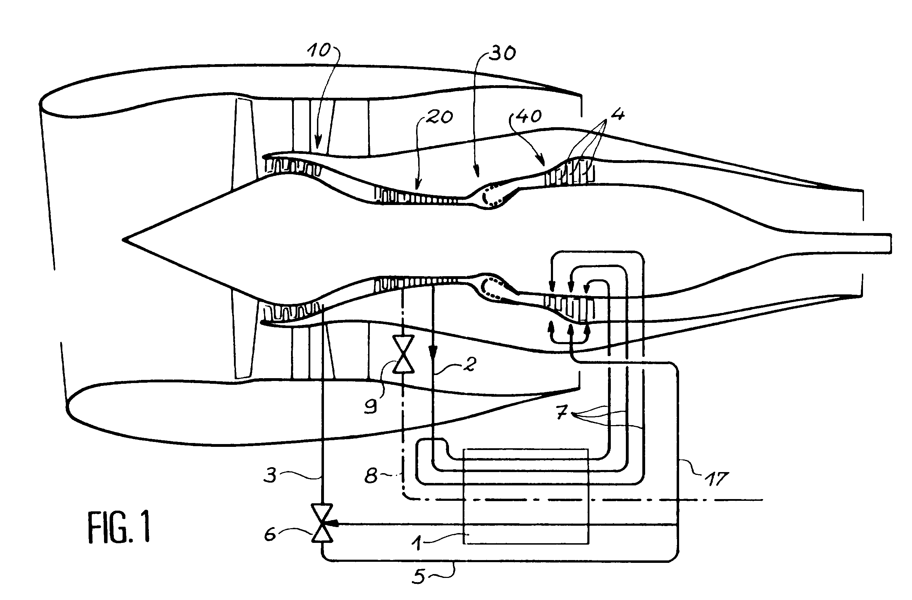

La figure 1 représente en coupe un turboréacteur du type installé sur un avion civil (du type CFM56, CFM constituant un élément d'une marque commerciale déposée).

En référence à la figure 1, on peut distinguer les principaux étages du flux interne du turboréacteur qui sont le compresseur basse pression 10, suivi du compresseur haute pression 20, suivi de la chambre de combustion 30, suivi de la turbine 40. Les disques 4 de cette dernière sont donc, comme on l'a expliqué, à refroidir pendant les phases de régime plein gaz du turboréacteur. On verra plus loin qu'il est également utile de les réchauffer pendant les phases de fonctionnement en bas régime ou régime de croisière du turboréacteur.

La régulation en température des disques 4 de la turbine se fait donc grâce à un réseau de ventilation d'air à température déterminée. Ce réseau comprend principalement un premier prélèvement 2 d'air à haute pression, au niveau du compresseur haute pression 20 du turboréacteur. L'air prélevé ainsi à haute pression sert à refroidir les disques 4. Il faut en outre refroidir cet air haute pression dans certaines phases de fonctionnement.

Le dispositif comprend donc un prélèvement 3 d'air froid à basse pression et à température relativement basse. Ce prélèvement d'air à basse pression 3 est effectué au niveau du compresseur basse pression 10.

Enfin, un échangeur de chaleur 1 est utilisé pour confronter l'air prélevé dans ce premier prélèvement d'air à haute pression 2 et le prélèvement d'air à basse pression 3. A la sortie de cet échangeur de chaleur 1, l'air haute pression est donc refroidi et l'air basse pression est réchauffé.

Le premier prélèvement d'air haute pression 2 se subdivise en plusieurs tubes de refroidissement 7 pour que cet air haute pression puisse être réparti avec une bonne homogénéité périphérique sur les différents disques 4 du rotor de la turbine 40. Ces tubes de refroidissement 7 passent de préférence dans l'échangeur de chaleur 1. Ils pourraient néanmoins n'exister qu'en aval de ce dernier. La liaison mécanique de ces tubes de refroidissement 7 avec le rotor peut se faire par l'intermédiaire d'un joint tournant non représenté ou de manière connue, cette liaison passant au travers de l'étage de distributeur basse pression.

Selon l'invention, on installe une dérivation 5 sur le prélèvement d'air basse pression 3, court-circuitant (ou by-passant) l'échangeur de chaleur 1. La connexion de cette dérivation 5, en amont de l'échangeur de chaleur 1, se fait au moyen d'une vanne 6. Le débit d'air basse pression peut ainsi être modulé afin de pouvoir régler la température de sortie de cet air basse pression par un tube de ventilation 17 débouchant en regard du stator. En conséquence, la température de sortie de l'air haute pression dans les tubes de refroidissement 7 est ainsi régulée. On comprend donc qu'il est possible d'ajuster les températures et les dilatations respectives des disques du rotor et du stator pour différentes séries de conditions de fonctionnement du turboréacteur, comme c'est le cas lors d'un vol d'avion et d'obtenir une amélioration de leur tenue mécanique.

La loi de régulation de cette vanne 6 est déterminée par le calculateur du turboréacteur, en fonction des paramètres thermodynamiques qui y sont introduits.

Toujours en référence à la figure 1, il est possible d'ajouter un deuxième prélèvement d'air chaud haute pression, référencé 8, en parallèle du premier prélèvement 2. Ce deuxième prélèvement d'air chaud haute pression 8 passe à l'intérieur de l'échangeur de chaleur 1. Il est équipé d'une vanne de réglage de débit 9 placée en amont de l'échangeur de chaleur 1.

Ainsi, il est possible d'augmenter la quantité de chaleur transitant par l'échangeur de chaleur 1 et étant transmise à l'air froid basse pression. Une telle variante permet de maintenir à une température un peu plus élevée les disques du rotor et le stator de la turbine 40. Ceci est utilisé durant les régimes de croisière du turboréacteur, car cela permet de réduire le débit d'air refroidi transmis en particulier aux disques 4 du rotor, toujours en fonction des températures et de la dilatation des différents éléments du turboréacteur à ce niveau. Ainsi, les débits d'air chaud et froid peuvent être optimisés en fonction de la pénalisation que leurs prélèvements causent aux cycles de fonctionnement et de la sensibilité des performances aérodynamiques de la turbine par rapport aux jeux existant entre les différents organes les constituant, tout en prenant en compte la tenue mécanique des pièces.

L'air prélevé par le deuxième prélèvement d'air chaud haute pression 8 peut être restitué éventuellement dans la veine des gaz du turboréacteur.

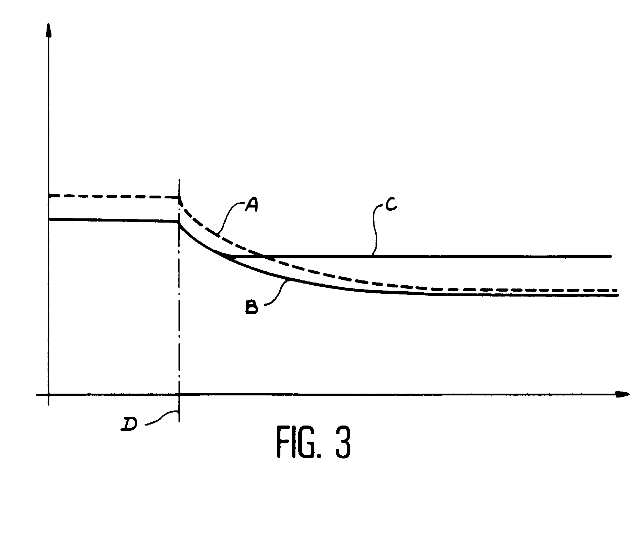

En se reportant à la figure 3, on a représenté en traits interrompus par la courbe A des variations de la température du rotor (ordonnée) par rapport au temps de mission de l'avion équipé d'un turboréacteur classique (abscisse). Pendant la période de roulage au sol de l'avion, c'est-à-dire avant le point D, la température du rotor est relativement importante, mais constante. Au point D, l'avion décolle et les températures de fonctionnement du turboréacteur diminuent. En conséquence, la température du rotor baisse progressivement pour se stabiliser sur une valeur déterminée, représentée par une ligne horizontale.

On a également représenté en traits forts la courbe B de la température du rotor d'un turboréacteur selon l'invention. Pendant la période de roulage d'un avion équipé d'un tel turboréacteur, la température du rotor est constante, mais déjà relativement inférieure à celle du rotor d'un turboréacteur de l'art antérieur. En effet, les disques du rotor sont déjà ventilés plus abondamment. Après le point D, l'avion ayant décollé, la température du rotor baisse pour tendre vers une valeur déterminée très peu inférieure à celle d'un rotor d'un turboréacteur de l'art antérieur. L'optimisation obtenue peut cependant conduire à une température de croisière légèrement supérieure (courbe C), ce qui permet une réduction des jeux.

Dans le but de minimiser encore plus les variations entre les éléments constitutifs de la turbine et en conséquence les jeux entre ces différents éléments, une caractéristique supplémentaire de l'invention consiste à réduire encore plus cette différence de température.

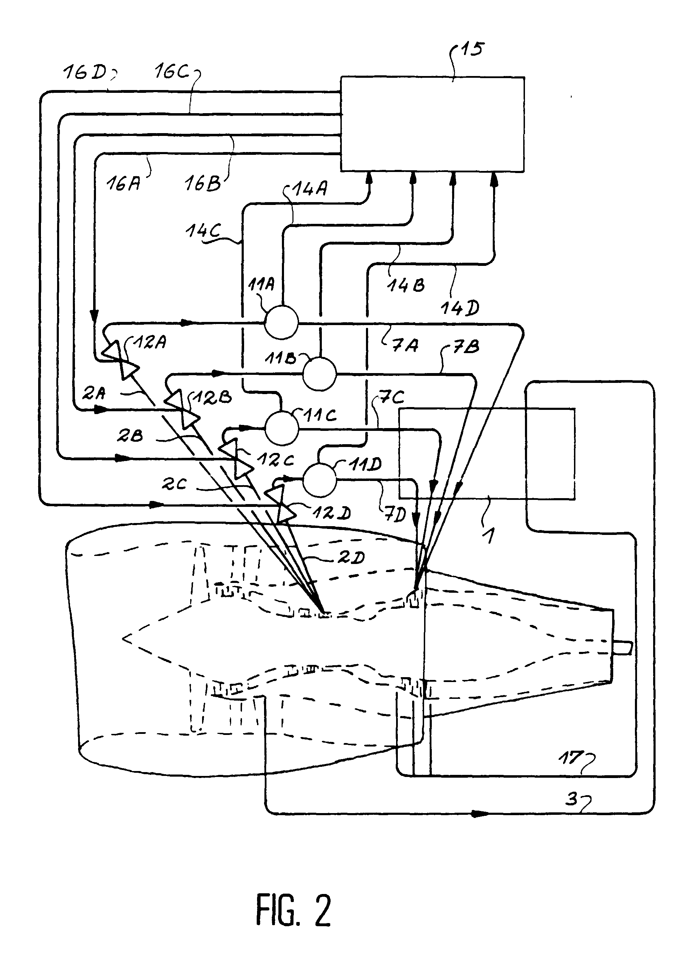

En se reportant à la figure 2, on prévoit de placer sur chaque premier prélèvement d'air haute pression 2A, 2B,..., 2N, un capteur de pression 11A, 11B,..., 11N. Chacun de ces capteurs de pression 11 permet de détecter une éventuelle chute de pression dans un premier prélèvement haute pression 2. En effet, s'il se produit une panne, c'est-à-dire qu'un de ces prélèvements se trouve cassé, la pression y décroît rapidement et cette anomalie est aussitôt signalée. Dans ce but, chaque capteur de pression 11A,..., 11N est relié par une liaison de pression 14A,..., 14N à un calculateur 15. Ce dernier est également relié à une vanne pilotée 12A,..., 12N par une liaison de commande 16A, ..., 16N.

Ainsi, lorsqu'une panne se produit dans l'un des premiers prélèvements d'air à haute pression 2, le calculateur 15 en est aussitôt averti et commande les vannes pilotées 12 des autres premiers prélèvements d'air haute pression 2, de manière à compenser la mise hors service du premier prélèvement d'air chaud endommagé. En d'autres termes, les autres vannes pilotées 12 sont un peu plus ouvertes pour compenser cette mise hors service. La vanne pilotée placée sur le premier prélèvement d'air haute pression et qui est endommagée est aussitôt fermée pour éviter des fuites d'air à l'extérieur du turboréacteur et conserver ainsi le niveau de performance de ce dernier.

On peut également réguler les vannes 12A, ..., 12N en fonction des paramètres thermodynamiques et des conditions de vol de l'appareil équipé du turboréacteur.

En revenant une nouvelle foi à la figure 3, on a représenté en traits forts une courbe C, symbolisant les variations de température du rotor de la turbine du turboréacteur selon l'invention, équipée de la variante qui vient d'être décrite. On s'aperçoit que juste après le décollage (point D), la température de ce rotor peut être rapidement stabilisée à une valeur déterminée. Les écarts de température de ce rotor sont donc réduits à un minimum.

### AVANTAGES DE L'INVENTION

On obtient une amélioration de la tenue mécanique des composants durant les périodes de fonctionnement dites "sévères", c'est-à-dire les "pleins régimes" du turboréacteur.

En cas de panne du circuit de ventilation des disques du rotor de la turbine, le niveau de performance du turboréacteur est conservé.

En croisière, on obtient une amélioration de la consommation spécifique du turboréacteur par un ajustement du débit de refroidissement du rotor de la turbine. L'augmentation de la température du rotor par rapport aux conditions nominales permet également de réduire le débit d'air de refroidissement du carter du turboréacteur en maintenant identiques les jeux de fonctionnement entre le rotor et le stator de la turbine.

## Revendications

1. Système de ventilation des disques (4) et du stator de turbine (40) d'un turboréacteur comportant :
- un premier prélèvement d'air à haute pression (2) à une température relativement élevée, destiné à refroidir les disques (4), se divisant en plusieurs tubes de refroidissement (7),
- un prélèvement d'air à basse pression (3) à une température relativement basse, destiné à refroidir le stator et comportant une dérivation (5) et une vanne (6) placée en amont de la dérivation (5) et commandée de manière à réguler l'alimentation de cette dérivation (5) en fonction du régime du turboréacteur ;
- un échangeur de chaleur (1) appliqué à ces deux prélèvements (2, 3) pour refroidir l'air haute pression, l'air froid basse pression se trouvant réchauffé, permettant ainsi de refroidir les disques (4) et le stator de la turbine (40) pendant les différentes phases de fonctionnement du turboréacteur, la dérivation (5) permettant de court-circuiter l'échangeur de chaleur (1).

2. Système selon la revendication 1, caractérisé en ce que les tubes de refroidissement (7) du prélèvement haute pression (2) débouchent à proximité des disques (4) du rotor de la turbine (40) pour les refroidir.

3. Système selon la revendication 2, caractérisé en ce que le prélèvement d'air basse pression (3) se subdivise en plusieurs tubes de refroidissement (17) débouchant à proximité du stator de la turbine (40).

4. Système selon la revendication 1, caractérisé en ce qu'il comprend un deuxième prélèvement d'air chaud à haute pression (8), passant dans l'échangeur de chaleur (1) pour permettre ainsi d'augmenter le débit d'air chaud passant dans l'échangeur (1) et de réchauffer davantage l'air froid basse pression pour réchauffer les disques de turbine (40) durant les phases de fonctionnement du turboréacteur en régime de croisière.

5. Système selon la revendication 1, caractérisé en ce qu'il comprend pour chaque tube de refroidissement d'air haute pression (7A,..., 7N) :
- un capteur de pression (11A,..., 11N) placé en amont de l'échangeur de chaleur (1) ;
- une vanne pilotée (12A,..., 12N), placée sur le tube de refroidissement correspondant (7A,..., 7N), en amont du capteur de pression (11A,..., 11N);
- un calculateur (15) étant connecté à la sortie de chaque capteur (11A,..., 11N) et à l'entrée de chaque vanne pilotée (12A, ..., 12N) pour réguler ces vannes pilotées en fonction des paramètres thermodynamiques des conditions de fonctionnement du turboréacteur et, d'autre part, en fonction d'une éventuelle chute de pression dans un des tubes de refroidissement haute pression (7A,..., 7N).

## Patentansprüche

1. Kühlsystem zum Kühlen der Scheiben (4) und des Stators der Turbine (40) eines Turboluftstrahltriebwerks, bestehend aus
- einem ersten Abzug (2) zur Entnahme von Hochdruckluft mit relativ hoher Temperatur zum Kühlen der Scheiben (4), der sich in mehrere Kühlrohr (7) verzweigt,
- einem Abzug (3) zur Entnahme von Niederdruckluft mit relativ niedriger Temperatur zum Kühlen des Stators, wobei dieser Abzug (3) eine Umleitung (5) und ein auf der stromaufwärtigen Seite der Umleitung angeordnetes Ventil (6) umfaßt, das so gesteuert wird, daß es die Speisung der Umleitung (5) in Abhängigkeit von der Drehzahl des Turboluftstrahltriebwerks regelt, und
- einem Wärmetauscher (1), der an diesen beiden Abzügen (2, 3) angebracht ist, um die Hochdruckluft zu kühlen, wobei die kalte Niederdruckluft erwärmt wird, so daß auf diese Weise eine Kühlung der Scheiben (4) und des Stators der Turbine (40) während der verschiedenen Betriebsphasen des Turboluftstrahltriebwerks ermöglicht wird, wobei die Umleitung (5) ein Überbrücken des Wärmetauschers (1) ermöglicht.

2. System nach Anspruch 1, dadurch gekennzeichnet, daß die Kühlrohre (7) des Hochdruck Entnahmeabgriffs (2) in der Nähe der Scheiben (4) des Rotors der Turbine (40) münden, um diese Scheiben zu kühlen.

3. System nach Anspruch 2, dadurch gekennzeichnet, daß der Abzug (3) für die Niederdruckluft sich in mehrere Kühlrohre verzweigt, die in der Nähe des Stators der Turbine (40) münden.

4. System nach Anspruch 1, dadurch gekennzeichnet, daß es einen zweiten Abzug (8) für heiße Hochdruckluft aufweist, der durch den Wärmetauscher (1) verläuft, um so eine Erhöhung des Durchsatzes der in den Wärmetauscher (1) strömenden heißen Luft und eine weitere Erwärmung der kalten Niederdruckluft zu ermöglichen, um die Scheiben der Turbine (40) während der Betriebsphasen des Turboluftstrahltriebwerks im Reiseflug zu erwärmen.

5. System nach Anspruch 1, dadurch gekennzeichnet, daß es für jedes Kühlrohr (7A, ..., 7N) zum Kühlen der Hochdruckluft aufweist:
- einen auf der stromaufwärtigen Seite des Wärmetauschers (1) angeordneten Druckaufnehmer (11A, ..., 11N),
- ein gesteuertes Ventil (12A, ..., 12N), das auf dem entsprechenden Kühlrohr (7A, ..., 7N) stromaufwärts des Druckaufnehmers (11A, ..., 11N) angeordnet ist, und
- einen Rechner (15), der mit dem Ausgang jedes Druckaufnehmers (11A, ..., 11N) und mit dem Eingang jedes gesteuerten Ventils (12A, ..., 12N) verbunden ist, um die gesteuerten Ventile in Abhängigkeit von den thermodynamischen Parametern der Betriebszustände des Turboluftstrahltriebwerks und andererseits in Abhängigkeit von einem eventuellen Druckabfall in einem der Hochdruck-Kühlrohre (7A, ..., 7N) zu regulieren.

## Claims

1. System for ventilating the discs (4) and the stator of the turbine (40) of a turbojet engine, including:
- a first tapping (2) for high-pressure air at a relatively high temperature, this being intended to cool the discs (4) and splitting into a number of cooling tubes (7),
- a tapping (3) for low-pressure air at a relatively low temperature, this being intended to cool the stator and includinq a bypass line (5) and a valve (6) placed upstream of the bypass line (5) and controlled in such a way as to control the supply to this bypass line (5) as a function of the speed of the turbojet engine;
- a heat exchanger (1) applied to these two tappings (2, 3) for cooling the high-pressure air, the low-pressure cold air becoming heated, thus allowing the discs (4) and the stator of the turbine (40) to be cooled during the various phases of operation of the turbojet engine, the bypass line (5) allowing the heat exchanger (1) to be short-circuited.

2. System according to Claim 1, characterized in that the cooling tubes (7) of the high-pressure tapping (2) open near to the discs (4) of the rotor of the turbine (40) in order to cool them.

3. System according to Claim 2, characterized in that the low-pressure air tapping (3) is split up into several cooling tubes (17) opening near to the stator of the turbine (40).

4. System according to Claim 1, characterized in that it comprises a second high-pressure hot air tapping (8) passing through the heat exchanger (1) in order thus to allow the flow rate of hot air passing through the exchanger (1) to be increased, and the low-pressure cold air to be heated up more in order to heat up the discs of the turbine (40) during phases in which the turbojet engine is running at cruising speed.

5. System according to Claim 1, characterized in that for each high-pressure air cooling tube (7A, ..., 7N) it comprises:
- a pressure sensor (11A, ..., 11N) placed upstream of the heat exchanger (1);
- a controlled valve (12A, ..., 12N), placed on the corresponding cooling tube (7A,..., 7N) upstream of the pressure sensor (11A, ..., 11N) ;
- a computer (15) being connected to the output from each sensor (11A,..., 11N) and to the input of each controlled valve (12A, ..., 12N) for regulating these controlled valves as a function of the thermodynamic parameters of the conditions in which the turbojet engine is running and, on the other hand, as a function of any drop in pressure in one of the high-pressure cooling tubes (7A,..., 7N).
